# EUROPEAN PATENT APPLICATION

(11) **EP 4 446 170 A1**
(43) Date of publication of application: **16.10.2024**
(21) Application number: 22903405.3
(22) Date of filing: 05.12.2022
(51) Int. Cl.: B60R 16/03

(54) **VEHICLE POWER CONTROL SYSTEM, METHOD AND APPARATUS, STORAGE MEDIUM, AND VEHICLE**

(30) Priority: 06.12.2021 CN 202111480998
(71) Applicant: Beijing Co Wheels Technology Co., Ltd, Beijing 101300 (CN)
(72) Inventor: MENG, Yue, Beijing 101300 (CN); NING, Yunpeng, Beijing 101300 (CN)
(74) Representative: Maiwald GmbH
(86) International application number: PCT/CN2022/136649
(87) International publication number: WO 2023/103983

(57) **Abstract**

Disclosed are a vehicle power control system, method and apparatus, a storage medium, and a vehicle. The vehicle power control system comprises: a control apparatus, a first driving motor, a generator, an engine, a driving motor power supply loop and a bypass branch, wherein the driving motor power supply loop and the bypass branch are connected in parallel and both located between the first driving motor and the generator; the generator is in mechanical transmission connection with the engine; a first motor controller and a second motor controller are provided in the driving motor power supply loop; the first motor controller is electrically connected to the first driving motor; the second motor controller is electrically connected to the generator; a switching element is provided in the bypass branch; the control apparatus is used for controlling, in response to the fact that a vehicle speed satisfies a preset vehicle speed s condition, the second motor controller to stop working, and controlling the switching element to be closed to turn on the bypass branch.

## Description

### CROSS-REFERENCE TO RELATED APPLICATIONS

This application is based on and claims priority to Patent Application No. 202111480998.6, filed on December 6, 2021, the entire contents of which are incorporated herein by reference.

### TECHNICAL FIELD

The present disclosure relates to a field of vehicle technologies, and specifically to a system, a method and an apparatus for vehicle power control, a storage medium and a vehicle.

### BACKGROUND

New energy vehicles (NEVs), as important means of transportation meeting current environmental and energy requirements, are widely welcomed by society and individuals. Types of the NEVs are continuously developed, including battery electric vehicles (BEVs), plug-in hybrid electric vehicles (PHEVs) and extended-range electric vehicles (EREVs). One key concern of the NEVs is endurance of the NEVs.

The EREVs have an outstanding endurance, which prolong an endurance time by matching an engine and a generator with a battery. However, the engine drives the generator to operate, and energy generated by the generator is transmitted from a motor controller of the generator to a motor controller of a driving motor and then to a driving motor, which will lose energy on the motor controller. An energy transfer link will increase an energy loss rate, and reduce energy utilization efficiency, which finally affects the endurance of the vehicles.

### SUMMARY

In order to solve at least one problem in the related art, a system, a method and an apparatus for vehicle power control, a storage medium and a vehicle are provided in at least one embodiment of the disclosure.

In a first aspect, a system for vehicle power control is provided according to embodiments of the present disclosure, and includes: a control apparatus, a first driving motor, a generator, an engine, and a driving motor electricity supply loop and a bypass branch, in which the driving motor electricity supply loop and the bypass branch are connected in parallel, and are positioned between the first driving motor and the generator; the generator is in mechanical transmission connection with the engine; the driving motor electricity supply loop is provided with a first motor controller and a second motor controller; the first motor controller is electrically connected to the first driving motor; the second motor controller is electrically connected to the generator; the bypass branch is provided with a switching element; and the control apparatus is configured to, in response to a speed meeting a preset speed condition, control the second motor controller to stop working, and control the switching element to be turned on to conduct the bypass branch.

In some embodiments, the switching element is a silicon-controlled switch.

In some embodiments, the system for vehicle power control further includes a second driving motor and a third motor controller, in which the third motor controller is electrically connected to the second driving motor and the second motor controller, respectively; and the first driving motor is configured to drive two front wheels of a vehicle, and the second driving motor is configured to drive two rear wheels of the vehicle; or, the first driving motor is configured to drive two rear wheels of a vehicle, and the second driving motor is configured to drive two front wheels of the vehicle.

In some embodiments, the system for vehicle power control further includes a power battery, in which the power battery is electrically connected to the first motor controller, the second motor controller and the third motor controller.

In a second aspect, a method for vehicle power control is further provided according to embodiments of the present disclosure, and is applicable for the system for vehicle power control according to any embodiment of the first aspect. The method for vehicle power control includes: acquiring the speed of a vehicle; in response to the speed meeting the preset speed condition, controlling the second motor controller to stop working; and controlling the switching element to be turned on to conduct the bypass branch.

In some embodiments, before controlling the switching element to be turned to conduct the bypass branch, the method for vehicle power control further includes: adjusting a rotational speed of the engine, to match a frequency of the generator to a frequency of the first driving motor, and match a phase of the generator to a phase of the first driving motor.

In some embodiments, the system for vehicle power control further includes a second driving motor, a third motor controller and a power battery; the third motor controller is electrically connected to the second driving motor and the second motor controller, respectively; and the first driving motor is configured to drive two front wheels of the vehicle, and the second driving motor is configured to drive two rear wheels of the vehicle; or, the first driving motor is configured to drive two rear wheels of the vehicle, and the second driving motor is configured to drive two front wheels of the vehicle; and the power battery is electrically connected to the first motor controller and the third motor controller, respectively; and the method further includes: controlling the power battery to supply electricity to the second driving motor through the third motor controller.

In some embodiments, the method further includes: in response to the speed not meeting the preset speed condition, controlling the switching element to be turned off to disconnect the bypass branch; and controlling the second motor controller to start working, to conduct the driving motor electricity supply loop.

In a third aspect, an apparatus for vehicle power control is further provided according to embodiments of the present disclosure, and includes: a speed acquiring module, configured to acquire a speed of a vehicle; a second motor controller control module, configured to, in response to the speed meeting a preset speed condition, control a second motor controller to stop working; and a bypass branch control module, configured to control a switching element to be turned on to conduct a bypass branch.

In a fourth aspect, a computer-readable storage medium storing a computer program is further provided according to embodiments of the disclosure. When the computer program is executed by a processor, steps of the method as described in any embodiment of the second aspect are implemented.

In a fifth aspect, a vehicle including a memory storing a computer program and a processor is further provided according to embodiments of the disclosure. When the computer program is executed by the processor, steps of the method as described in any embodiment of the second aspect are implemented.

In at least one embodiment of the disclosure, the driving motor electricity supply loop is provided with the bypass branch therein, so that the electricity supply loop and the bypass branch are connected in parallel, and the bypass branch is provided with the switching element therein, the control apparatus is configured to, in response to the speed meeting the preset speed condition, control the second motor controller to stop working, and control the switching element to be turned on to conduct the bypass branch. Since an energy loss mostly occurs on the motor controller in an energy transmission process, an energy utilization may be enhanced by reducing the energy loss on the motor controller. Therefore, the bypass branch is connected in parallel on the electricity supply loop, so that the engine is directly connected to the driving motor, and the energy directly flows from the generator to the driving motor, which avoids an extra loss on the motor controller.

### BRIEF DESCRIPTION OF THE DRAWINGS

In order to explain the technical solutions in embodiments of the present disclosure more clearly, attached drawings described in the embodiments or in the related art will be briefly introduced below. Obviously, the diagrams described as below are only some embodiments of the present disclosure. Those skilled in the art may obtain other illustrative creative work.
FIG. 1 is a structural diagram illustrating a system for vehicle power control according to embodiments of the present disclosure.
FIG. 2 is a structural diagram illustrating another system for vehicle power control according to embodiments of the present disclosure.
FIG. 3 is a structural diagram illustrating another system for vehicle power control according to embodiments of the present disclosure.
FIG. 4 is a flowchart illustrating a method for vehicle power control according to embodiments of the present disclosure.
FIG. 5 is a block diagram illustrating a structure of an apparatus for vehicle power control according to embodiments of the present disclosure.

### DETAILED DESCRIPTION

In order to understand the above purpose, features and advantages of the present disclosure more clearly, the present disclosure may be further described in combination with attached drawings and embodiments. It may be understood that, embodiments are a part of embodiments of the disclosure, rather than all embodiments. The specific embodiments described here are merely used for explaining the present disclosure, rather than a limitation of embodiments of the present disclosure. On the basis of embodiments of the present disclosure, all other embodiments obtained by those skilled in the art are within the protection scope of the present disclosure.

It should be noted that relational terms such as "first" and "second" are used herein to distinguish one entity or operation from another entity or operation without necessarily requiring or implying any such actual relationship or order between such entities or operations.

A vehicle will lose certain energy in a transmission process. Since energy needs to be transmitted from a motor controller of a generator to a motor controller of a driving motor and then to a driving motor, there will be an energy loss on the motor controller. The energy loss will result in a reduction in energy utilization, and further a reduction in an endurance mileage of the vehicle.

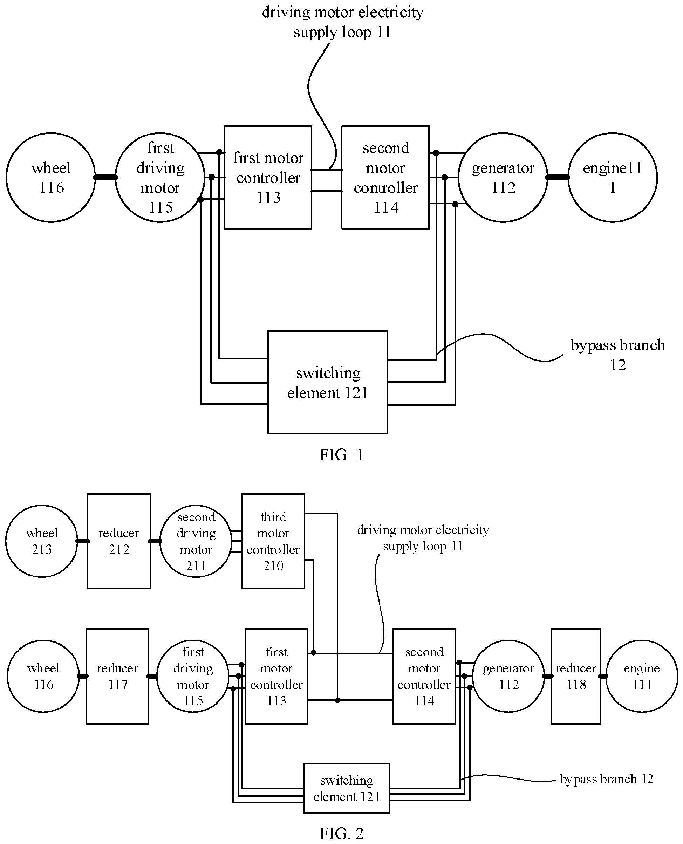

In view of disadvantages of the related art, a system for vehicle power control is provided according to embodiments of the disclosure. FIG. 1 is a structural diagram illustrating a system for vehicle power control according to embodiments of the present disclosure. As illustrated in FIG. 1, the system for vehicle power control according to embodiments of the present disclosure includes a control apparatus (not shown in the figure), a first driving motor 115, a generator 112, an engine 111, a driving motor electricity supply loop 11, and a bypass branch 12. The driving motor electricity supply loop 11 and the bypass branch 12 are connected in parallel, and are positioned between the first driving motor 115 and the generator 112. The generator 112 is in mechanical transmission connection with the engine 111. The engine 111 transmits energy generated due to rotation of the engine 111 itself to the generator 112, which drives the generator 112 to rotate to generate electricity.

The driving motor electricity supply loop 11 is provided with a first motor controller 113 and a second motor controller 114. The first motor controller 113 is electrically connected to the first driving motor 115. The second motor controller 114 is electrically connected to the generator 112. The first motor controller 113 controls the first driving motor 115, to process signals input into the first motor controller 113, and monitors corresponding parameters of the first driving motor 115 for adjustment control of voltage and current and completion of other control functions, and transmits an operation state of a control system of the first driving motor 115 to the controller. Meanwhile, the first driving motor 115 controls adjustment of a rotational speed of wheels 116. The second motor controller 114 is configured to control related parameter information of the generator 112, to process signals input to the second motor controller 114, and monitor corresponding parameters of the second driving motor 115, and transmit the operation state of the control system of the generator 112 to the control apparatus, and adjust according to instructions of the control apparatus.

The bypass branch 12 is provided with a switching element 121. In response to the bypass branch 12 being conducted, the generator will be directly connected to the first driving motor 115 via the switching element 121, and the generator 112 directly drives the first driving motor 115 without necessarily via the first motor controller 113 and the first motor controller 114. The control apparatus is configured to, in response to a speed meeting a preset speed condition, control the second motor controller 114 to stop working, and control the switching element 121 to be turned on to conduct the bypass branch 12. In this case, energy generated by the generator may be directly transmitted to the first driving motor 115 via the switching element 121.

In embodiments of the disclosure, the control apparatus may, in response to the speed meeting the preset speed condition, control the second motor controller 114 to stop working, and control the switching element 121 to be turned on to conduct the bypass branch 12, so that the energy generated by the generator may be directly transmitted to the first driving motor 115 via the switching element only, and the first driving motor 115 is further controlled to drive the wheels 116 to operate, which reduces loss caused by energy flowing through the first motor controller 113 and the second motor controller 114. Since the energy loss of the switching element 121 is much less than the energy loss of the first motor controller 113 and the second motor controller 114, and will not affect normal operation of the vehicle, a system structure is simple.

The preset speed condition, for example, is greater than a certain speed threshold, or a preset speed range. That is, when the vehicle runs at a high-speed condition, in response to a working efficiency of the engine being relatively high, the bypass branch supplies electricity to the first driving motor by disconnecting the driving motor electricity supply loop, which may improve the energy utilization. In another embodiments, when the vehicle does not meet the preset speed condition, that is, when the vehicle is in a low-speed running condition, in response to the vehicle being directly switched to supply electricity to the first driving motor via the bypass branch, a working efficiency of the engine is low, and an energy consumption loss of the engine is greater than an energy consumption saved by supplying electricity via the bypass branch. Therefore, in embodiments of the disclosure, in response to the vehicle meeting the preset speed condition, the vehicle is switched to supply electricity to the first driving motor via the bypass branch, to enhance the energy utilization.

In some embodiments, the switching element is a silicon-controlled switch. The silicon-controlled switch, referred to as a thyristor electronic switch, is a high-power switch type semiconductor component that fully utilizes characteristics such as zero-voltage trigger, zero-current cutoff, a contactless switch and a high corresponding speed to enable a voltage on a capacitor to rise rapidly from zero to a rated working voltage. When the silicon-controlled switch is disconnected, current on a thyristor is cut off at zero, so that no inrush current and no overvoltage of cutoff of the capacitor may be achieved. The silicon-controlled switch remains in a non-conducted state normally until the silicon-controlled switch is triggered or ignited by fewer control signals. Once ignited, the silicon-controlled switch remains in a conducted state even if a trigger signal is removed, and the silicon-controlled switch is cut off by applying a reverse voltage between its anode and cathode or reducing a current through a thyristor diode to below a certain value. In response to the speed meeting the preset speed, the control apparatus only needs to control the silicon-controlled switch to be turned on. The silicon-controlled switch is controlled by the control apparatus with simple control, low in failure rate and low in energy consumption.

It needs to be noted that, types of switching elements are not limited in embodiments of the disclosure, and may be selected according to actual requirements.

In some embodiments, FIG. 2 is a structural diagram illustrating another system for vehicle power control according to embodiments of the present disclosure. As illustrated in FIG. 2, the system for vehicle power control further includes a second driving motor 211 and a third motor controller 210. The third motor controller 210 is electrically connected to the second driving motor 211 and the second motor controller 114. The third motor controller 210 is electrically connected to the second driving motor 211, and is configured to control the second driving motor 211 to work according to predetermined relevant parameters such as a direction, a speed and an angle. The third motor controller 210 is electrically connected to the second motor controller 114, so that the second driving motor 211 matches the working efficiency of the generator 112 controlled by the second motor controller 114. Since the frequency of the generator 112 is consistent with the frequency of the engine 111, a wheel speed matches a rotational speed of the engine, and the vehicle runs normally. The first driving motor 115 is configured to drive two front wheels of the vehicle, and the second driving motor 211 is configured to drive two rear wheels of the vehicle; or, the first driving motor 115 is configured to drive two rear wheels of the vehicle, and the second driving motor 211 is configured to drive two front wheels of the vehicle. The first driving motor 115 may in mechanical transmission connection with the two front wheels for driving the vehicle, to drive the two front wheels to work, and the second driving motor 211 may in mechanical transmission connection with the two rear wheels for driving the vehicle, to drive the two rear wheels to work; or, the first driving motor 115 may in mechanical transmission connection with the two rear wheels for driving the vehicle, to drive the two rear wheels to work, and the second driving motor 211 may in mechanical transmission connection with the two front wheels for driving the vehicle, to drive the two front wheels to work.

In some embodiments, a reducer may be further arranged between the driving motor and the wheels. Arranging the reducer between the engine and the generator may match a speed and transfer a torque.

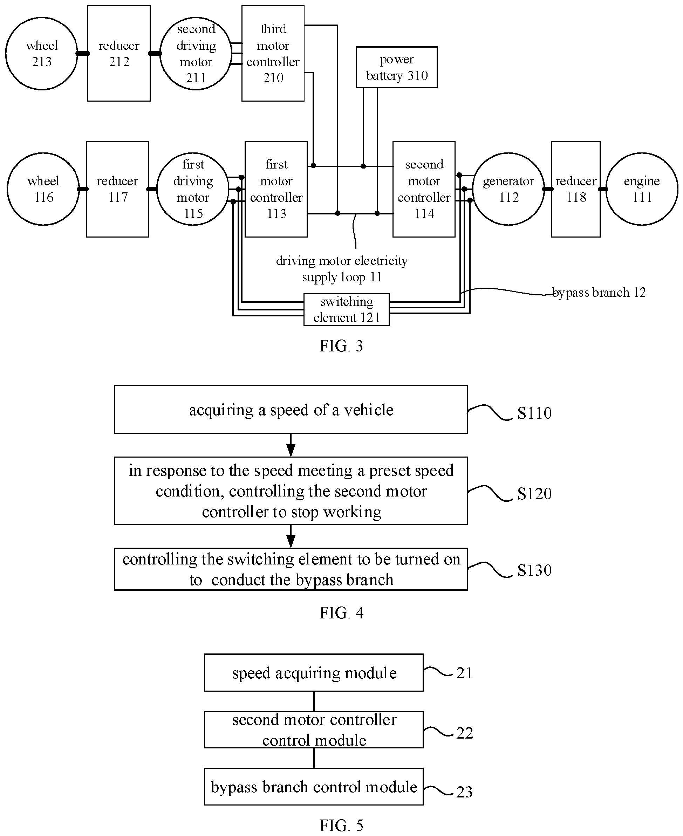

In some embodiments, FIG. 3 is a structural diagram illustrating another system for vehicle power control according to embodiments of the present disclosure. As illustrated in FIG. 3, the system further includes a power battery 310. The power battery 310 is electrically connected to the first motor controller 113, the second motor controller 114 and the third motor controller 210, respectively. In response to the speed meeting the preset speed condition, the second motor controller 114 is turned off and the bypass branch is conducted. The engine 111 drives the generator 112, and the generator 112 supplies electricity to the first driving motor 115 via the bypass branch 12, and drives the wheels 116 to operate. The power battery 310 may drive the second driving motor 211 directly via the third controller 210, and further control wheels 213 connected to the second driving motor 211 to operate. In the field of electric vehicles, the power battery works with the engine to improve the endurance of the vehicle.

A method for vehicle power control is further provided according to embodiments of the present disclosure. FIG. 4 is a flowchart illustrating a method for vehicle power control according to embodiments of the present disclosure. The method for vehicle power control in embodiments of the disclosure is applicable for the system for vehicle power control in the above any embodiment. The method for vehicle power control includes steps S110 to S130.

At S 110, a speed of a vehicle is acquired.

At S120, in response to a speed meeting a preset speed condition, a second motor controller is controlled to stop working.

At S130, a switching element is controlled to be turned on to conduct the bypass branch.

For example, the speed of the vehicle is acquired by configuring a sensor, and is compared with the preset speed condition. For example, the preset speed condition is greater than a certain speed threshold, or a preset speed range. In response to the speed meeting the preset speed condition, the second motor controller is controlled to stop working. Since one end of the second motor controller is connected to the first motor controller, and the other end of the second motor controller is connected to the generator, the first motor connector is disconnected from the generator, and energy transmitted via the generator cannot be transmitted to the first driving motor via the driving motor electricity supply loop. In embodiments of the disclosure, the switching element is controlled to be turned on, turning on the switching element may cause the bypass branch to be conducted, and energy of the generator is transmitted to the first driving motor via the switching element, so that the first driving motor may control the wheels to operate, and control the vehicle to run normally.

According to the method for vehicle power control, the second motor controller is controlled to be turning on and the switching element is controlled to be turning on, so that when the speed meets the preset speed, the energy of the generator is be transmitted to the first driving motor without necessarily via the first motor controller and the second motor controller, but may be transmitted via a path of transmitting from the switching element to the first driving motor, which avoids an energy loss on the first motor controller and the second motor controller. And since the energy loss caused by the switching element is far less than the energy loss of the motor controller, the energy utilization of the vehicle may be enhanced, and the endurance of the vehicle may be improved.

In some embodiments, before controlling the switching element to be turned to conduct the bypass branch, the method further includes: adjusting a rotational speed of the engine, to match a frequency of the generator to a frequency of the first driving motor, and match a phase of the generator to a phase of the first driving motor.

The first motor controller controls the first driving motor, and the first driving motor drives the wheels to work, and the second motor controller adjusts the rotational speed of the generator, and the generator is connected to the engine, and the first motor controller and the second motor controller may control the frequency and the rotational speed of the first driving motor to be consistent with the frequency and the rotational speed of the driving motor, such that controls the vehicle to run normally. After the second motor controller is turned off, related parameters such as the frequency and the rotational speed of the generator and the frequency and the rotational speed of the driving motor cannot be controlled by the first motor controller and the second motor controller. Therefore, before the switching element needs to be turned on, the rotational speed of the engine is adjusted, so that the frequency of the generator matches the frequency of the first driving motor, and the phase of the generator matches the phase of the first driving motor, which ensures normal running of the vehicle. The frequency of the generator depends on the engine. When the frequency of the generator varies, the rotational speed of the engine may be adjusted. The frequency of the engine becomes smaller as the rotational speed of the engine becomes smaller, and the frequency of the generator becomes smaller correspondingly, so that the frequency of the generator may be adjusted, until the frequency of the generator matches the frequency of the first driving motor.

In some embodiments, the system for vehicle power control further includes a second driving motor, a third motor controller and a power battery. The third motor controller is electrically connected to the second driving motor and the second motor controller, respectively The first driving motor is configured to drive two front wheels of the vehicle, and the second driving motor is configured to drive two rear wheels of the vehicle; or, the first driving motor is configured to drive two rear wheels of the vehicle, and the second driving motor is configured to drive two front wheels of the vehicle. The power battery is electrically connected to the first motor controller and the third motor controller, respectively. The method for vehicle power control further includes: controlling the power battery to supply electricity to the second driving motor through the third motor controller. An electric vehicle is provided with a power battery. The power battery transmits energy to the second driving motor, and the third motor controller is configured to adjust parameters such as the rotational speed of the second driving motor.

In some embodiments, the method for vehicle power control further includes: in response to the speed not meeting the preset speed condition, controlling the switching element to be turned off to disconnect the bypass branch; and controlling the second motor controller to start working, to conduct the driving motor electricity supply loop.

In response to the speed meeting the preset speed condition, the second motor controller is controlled to stop working, and the switching element is controlled to be turned on and the bypass branch is to be conducted. Since the speed may change in either high or low in a running process of the vehicle, in response to the speed not meeting the preset speed condition in a changing process, the switching element is controlled to be turned off and the bypass branch is to be disconnected, and the second motor controller is controlled to start working, so that energy is transmitted to the first driving motor through the first motor controller and the second motor controller, further to control the wheels to operate.

The preset speed condition, for example, is greater than a certain speed threshold, or a preset speed range. That is, when the vehicle runs at a high-speed condition, in response to a working efficiency of the engine being relatively high, the bypass branch supplies electricity to the first driving motor by disconnecting the driving motor electricity supply loop, which may improve the energy utilization. Since the speed may change in either high or low in the running process of the vehicle, in response to the speed not meeting the preset speed condition in the changing process, that is, when the vehicle is in a low-speed running condition, in response to the vehicle being directly switched to supply electricity to the first driving motor via the bypass branch, the working efficiency of the engine is low, and the energy consumption loss of the engine is greater than the energy consumption saved by supplying electricity via the bypass branch. Therefore, in embodiments of the disclosure, in response to the vehicle meeting the preset speed condition, the vehicle is switched to supply electricity to the first driving motor via the bypass branch, to enhance the energy utilization.

An apparatus for vehicle power control is provided according to embodiments of the present disclosure. FIG. 5 is a block diagram illustrating a structure of an apparatus for vehicle power control according to embodiments of the present disclosure. As illustrated in FIG. 5, the apparatus for vehicle power control includes a speed acquiring module 21, a second motor controller control module 22 and a bypass branch control module 23.

The speed acquiring module 21 is configured to acquire a speed of a vehicle. The second motor controller control module 22 is configured to, in response to the speed meeting a preset speed condition, control a second motor controller to stop working. The bypass branch control module 23 is configured to control a switching element to be turned on to conduct a bypass branch.

In embodiments of the disclosure, in response to the speed meeting the preset speed condition, the second motor controller is controlled to stop working, and the switching element is controlled to be turned on and the bypass branch is to be conducted. The energy of the generator may be transmitted without necessarily via the first motor controller and the second motor controller, but via a path of the generator, the switching element and the first driving motor, which avoids energy loss on the motor controller. Even if the switching element may cause part of energy loss, but the part of energy loss is less than the loss of the motor controller, which enhances the energy utilization in the vehicle, and improves the endurance of the vehicle.

A computer-readable storage medium storing a computer program is further provided according to embodiments of the disclosure. When the computer program is executed by a processor, steps of the method for vehicle power control in any embodiment of the apparatus for vehicle power control may be implemented.

It needs to be noted that, examples of the readable storage medium may be, but is not limited to, an electrical, a magnetic, an optical, an electromagnetic, an infrared, or a semiconductor system, apparatus or device, or any combination of the above. More specific examples of the computer-readable storage medium (a non-exhaustive list) include an electronic connector with one or more cables, a portable computer disk, a hardware, a random access memory (RAM), a read-only memory (ROM), an electrical programmable read-only ROM (EPROM), an optical fiber device, and a portable compact disk read-only memory (CD-ROM), an optical storage device, a magnetic storage device, or any appropriate combination of above. In the disclosure, a readable storage medium may be any tangible medium that may contain or store a program for use by or in connection with an instruction execution system, apparatus, or device.

The storage medium provided in the above embodiments of the present disclosure has the same beneficial effects as the method adopted, operated or implemented by an application program or an instruction stored thereon, for the same invention concept as the method for vehicle power control provided in embodiments of the present disclosure.

A vehicle including a memory storing a computer program and a processor is provided according to embodiments of the present disclosure. When the computer program is executed by the processor, steps of the method for vehicle power control as described in the above any embodiment are implemented.

Based on the description of implementations, those skilled in the art may clearly understand that the present disclosure will be implemented by means of a software and a necessary general-purpose hardware, or by means of a hardware, but the forgoing is a better implementation in most cases. On the basis of such an understanding, the technical solution of the present disclosure essentially or partly contributing to the related art may be embodied in the form of a software product, and the computer software product may be stored in the storage medium.

Based on the description of implementations, those skilled in the art may clearly understand that the present disclosure will be implemented by means of a software and a necessary general-purpose hardware, or by means of a software, but the forgoing is a better implementation in most cases. On the basis of such an understanding, the technical solution of the present disclosure essentially or partly contributing to the related art may be embodied in the form of a software product, and the computer software product may be stored in the storage medium.

Technical features of the above embodiments may be combined arbitrarily. For the purpose of a brief description, all possible combinations of the technical features of the above embodiments are not described. However, as long as there is no contradiction in the combination of the technical features, it shall be deemed to be the scope of the description.

The above embodiments only express several implementations of the disclosure, and the description is specific and detailed, but it cannot be understood as a limitation of the scope of the invention patent. It should be noted that, for those skilled in the art, several improvements and modifications may be made without departing from the principles of the present disclosure, and these improvements and modifications are also considered to be within the protection scope of the present disclosure. Therefore, the protection scope of the present disclosure shall be subject to the protection scope of claims.

## Claims

1. A system for vehicle power control, comprising:
a control apparatus, a first driving motor, a generator, an engine, a driving motor electricity supply loop and a bypass branch, wherein
the driving motor electricity supply loop and the bypass branch are connected in parallel, and are positioned between the first driving motor and the generator;
the generator is in mechanical transmission connection with the engine;
the driving motor electricity supply loop is provided with a first motor controller and a second motor controller;
the first motor controller is electrically connected to the first driving motor; the second motor controller is electrically connected to the generator;
the bypass branch is provided with a switching element; and
the control apparatus is configured to, in response to a speed meeting a preset speed condition, control the second motor controller to stop working, and control the switching element to be turned on to conduct the bypass branch.

2. The system according to claim 1, wherein the switching element is a silicon-controlled switch.

3. The system according to claim 1 or 2, further comprising a second driving motor and a third motor controller, wherein
the third motor controller is electrically connected to the second driving motor and the second motor controller, respectively; and
the first driving motor is configured to drive two front wheels of a vehicle and the second driving motor is configured to driving two rear wheels of the vehicle; or, the first driving motor is configured to drive two rear wheels of a vehicle and the second driving motor is configured to drive two front wheels of the vehicle.

4. The system according to claim 3, further comprising a power battery, wherein the power battery is electrically connected to the first motor controller, the second motor controller and the third motor controller.

5. A method for vehicle power control, applicable for the system according to any one of claims 1 to 4, comprising:
acquiring the speed of a vehicle;
in response to the speed meeting the preset speed condition, controlling the second motor controller to stop working; and
controlling the switching element to be turned on to conduct the bypass branch.

6. The method according to claim 5, wherein before controlling the switching element to be turned to conduct the bypass branch, the method further comprises:
adjusting a rotational speed of the engine, to match a frequency of the generator to a frequency of the first driving motor, and match a phase of the generator to a phase of the first driving motor.

7. The method according to claim 5 or 6, wherein the system for vehicle power control further comprises a second driving motor, a third motor controller and a power battery, wherein
the third motor controller is electrically connected to the second driving motor and the second motor controller, respectively;
the first driving motor is configured to drive two front wheels of the vehicle, and the second driving motor is configured to drive two rear wheels of the vehicle; or, the first driving motor is configured to drive two rear wheels of the vehicle, and the second driving motor is configured to drive two front wheels of the vehicle;
the power battery is electrically connected to the first motor controller and the third motor controller, respectively; and
the method further comprises: controlling the power battery to supply electricity to the second driving motor through the third motor controller.

8. The method according to any one of claims 5 to 7, further comprising: in response to the speed not meeting the preset speed condition, controlling the switching element to be turned off to disconnect the bypass branch; and controlling the second motor controller to start working, to conduct the driving motor electricity supply loop.

9. An apparatus for vehicle power control, comprising:
a speed acquiring module, configured to acquire a speed of a vehicle;
a second motor controller control module, configured to, in response to the speed meeting a preset speed condition, control a second motor controller to stop working; and
a bypass branch control module, configured to control a switching element to be turned on to conduct a bypass branch.

10. A computer-readable storage medium storing a computer program, wherein when the computer program is executed by a processor, steps of the method according to any one of claims 5 to 8 are implemented.

11. A vehicle, comprising a memory storing a computer program and a processor, wherein when the computer program is executed by the processor, steps of the method according to any one of claims 5 to 8 are implemented.
